# EUROPEAN PATENT APPLICATION

(11) **EP 4 101 946 A1**
(43) Date of publication of application: **14.12.2022**
(21) Application number: 21750069.3
(22) Date of filing: 04.02.2021
(51) Int. Cl.: C25B 13/08, B01J 23/42, C08J 5/22, C25B 9/00

(54) **ION EXCHANGE MEMBRANE WITH CATALYST LAYER, ION EXCHANGE MEMBRANE, AND ELECTROLYTIC HYDROGENATION DEVICE**

(30) Priority: 06.02.2020 JP 2020018828
(71) Applicant: AGC INC., Chiyoda-ku, Tokyo 1008405 (JP)
(72) Inventor: SUMIKURA, Kosuke, Tokyo 100-8405 (JP); HAYABE, Shintaro, Tokyo 100-8405 (JP); NISHIO, Takuo, Tokyo 100-8405 (JP)
(74) Representative: Müller-Boré & Partner Patentanwälte PartG mbB
(86) International application number: PCT/JP2021/004037
(87) International publication number: WO 2021/157639

(57) **Abstract**

To provide an ion exchange membrane with a catalyst layer, an ion exchange membrane and an electrolytic hydrogenation apparatus, which can lower electrolysis voltage and increase current efficiency at the time of electrolytic hydrogenation of an aromatic compound.

The ion exchange membrane with a catalyst layer of the present invention has an inorganic particle layer containing inorganic particles and a binder, a layer (Sa) containing a first fluorinated polymer having sulfonic acid type functional groups, and a layer (Sb) containing a second fluorinated polymer having sulfonic acid type functional groups, and a catalyst layer, in this order, wherein the ion exchange capacity of the above first fluorinated polymer is lower than the ion exchange capacity of the above second fluorinated polymer.

## Description

### TECHNICAL FIELD

This invention relates to an ion exchange membrane with a catalyst layer, an ion exchange membrane, and an electrolytic hydrogenation apparatus.

### BACKGROUND ART

As a method for producing hydrogenated organic substances (e.g. cyclohexane, methylcyclohexane and decahydronaphthalene), a method of adding hydrogen to aromatic compounds (e.g. benzene, toluene and naphthalene) by a hydrogenation reactor, is known.

In recent years, an electrolytic hydrogenation method of an aromatic compound has been studied as an alternative to the above method, from such a viewpoint that the production of a hydrogenated organic substance can be simplified. Electrolytic hydrogenation of an aromatic compound is carried out, for example, by using an electrolytic hydrogenation apparatus having a structure in which a cathode and an anode are separated by an ion exchange membrane.

In Patent Document 1, as an ion exchange membrane in an electrolytic hydrogenation apparatus, a cathode catalyst layer-electrolyte membrane assembly having an electrolyte membrane (product name "NRE-212CS", manufactured by DuPont, a membrane composed of a fluorinated polymer having sulfonic acid groups), a zirconium oxide layer provided on the anode side surface of the electrolyte membrane, and a catalyst layer provided on the cathode side surface of the electrolyte membrane, is disclosed.

### PRIOR ART DOCUMENT

### PATENT DOCUMENT

Patent Document 1: Japanese Patent No. 6,400,410

### DISCLOSURE OF INVENTION

### TECHNICAL PROBLEM

In recent years, further reduction of electrolysis voltage and further improvement of current efficiency are required with a view to further improving the production efficiency of a hydrogenated organic substance in the electrolytic hydrogenation of an aromatic compound using an electrolytic hydrogenation apparatus.

Referring to Patent Document 1, the present inventors have applied, to an electrolytic hydrogenation apparatus, an ion exchange membrane with a catalyst layer, which has an inorganic particle layer, a layer containing a fluorinated polymer having sulfonic acid type functional groups, and a catalyst layer, in this order, whereby they have found that there is room for improvement in at least one of points of electrolysis voltage and current efficiency at the time of electrolytic hydrogenation of an aromatic compound.

The present invention has been made in view of the above circumstances and has an object to provide an ion exchange membrane with a catalyst layer, an ion exchange membrane and an electrolytic hydrogenation apparatus, which can lower the electrolysis voltage and increase the current efficiency at the time of electrolytic hydrogenation of an aromatic compound.

### SOLUTION TO PROBLEM

As a result of their careful study of the above problem, the present inventors have found that the desired effect can be obtained by using an electrolytic hydrogenation apparatus in which an inorganic particle layer of an ion exchange membrane with a catalyst layer is disposed on the anode side, and the catalyst layer of the ion exchange membrane with a catalyst layer is disposed on the cathode side, in a case where the ion exchange membrane with a catalyst layer, has the inorganic particle layer, a layer (Sa) containing a first fluorinated polymer, a layer (Sb) containing a second fluorinated polymer and the catalyst layer, in this order, wherein the ion exchange capacity of the first fluorinated polymer is lower than the ion exchange capacity of the second fluorinated polymer.

That is, the present inventors have found it possible to solve the above problem by the following constructions.
[1] An ion exchange membrane with a catalyst layer, having
   an inorganic particle layer containing inorganic particles and a binder,
   a layer (Sa) containing a first fluorinated polymer having sulfonic acid type functional groups,
   a layer (Sb) containing a second fluorinated polymer having sulfonic acid type functional groups, and
   a catalyst layer, in this order, wherein
   the ion exchange capacity of the first fluorinated polymer is lower than the ion exchange capacity of the second fluorinated polymer.
[2] The ion exchange membrane with a catalyst layer according to [1], which has a convexoconcave structure at the interface on the inorganic particle layer side in the layer (Sa).
[3] The ion exchange membrane with a catalyst layer according to [1] or [2], which further has a reinforcing material containing reinforcing yarns.
[4] The ion exchange membrane with a catalyst layer according to any one of [1] to [3], wherein the ion exchange capacity of the first fluorinated polymer is from 0.5 to 1.1 milliequivalents/gram dry resin.
[5] The ion exchange membrane with a catalyst layer according to any one of [1] to [4], wherein the ion exchange capacity of the second fluorinated polymer is from 0.7 to 2.0 milliequivalents/gram dry resin.
[6] The ion exchange membrane with a catalyst layer according to any one of [1] to [5], wherein the first fluorinated polymer having sulfonic acid type functional groups contains units based on a fluorinated olefin and units having sulfonic acid type functional groups and fluorine atoms.
[7] The ion exchange membrane with a catalyst layer according to [6], wherein the fluorinated olefin is tetrafluoroethylene, chlorotrifluoroethylene, vinylidene fluoride, vinyl fluoride or hexafluoropropylene.
[8] The ion exchange membrane with a catalyst layer according to [6] or [7], wherein the units having sulfonic acid type functional groups and fluorine atoms are units represented by the formula (1):

   Formula (1) -[CF₂-CF(-L-(SO₃M)ₙ)]-

   -in the formula, L is an n+1-valent perfluorohydrocarbon group which may contain an etheric oxygen atom, M is a hydrogen atom, an alkali metal or a quaternary ammonium cation, and n is 1 or 2.
[9] An ion exchange membrane having
   an inorganic particle layer containing inorganic particles and a binder,
   a layer (Sa) containing a first fluorinated polymer having sulfonic acid type functional groups,
   a layer (Sb) containing a second fluorinated polymer having sulfonic acid type functional groups, in this order, wherein
   the ion exchange capacity of the first fluorinated polymer is lower than the ion exchange capacity of the second fluorinated polymer.
[10] The ion exchange membrane according to [9], which has a convexoconcave structure at the interface on the inorganic particle layer side in the layer (Sa).
[11] The ion exchange membrane according to [9] or [10], which further has a reinforcing material containing reinforcing yarns.
[12] The ion exchange membrane according to any one of [9] to [11], wherein the ion exchange capacity of the first fluorinated polymer is from 0.5 to 1.1 milliequivalents/gram dry resin.
[13] The ion exchange membrane according to any one of [9] to [12], wherein the ion exchange capacity of the second fluorinated polymer is from 0.7 to 2.0 milliequivalents/gram dry resin.
[14] A method for producing an ion exchange membrane with a catalyst layer as defined in any one of [1] to [8], which comprises obtaining the ion exchange membrane as defined in [9], and forming a catalyst layer on the layer (Sb).
[15] An electrolytic hydrogenation apparatus having
   an electrolyzer equipped with an anode and a cathode, and
   the ion exchange membrane with a catalyst layer as defined in any one of [1] to [8], wherein
   the ion exchange membrane with a catalyst layer is disposed in the electrolyzer so as to separate the anode and the cathode, and
   the inorganic particle layer of the ion exchange membrane with a catalyst layer is disposed on the anode side, and the catalyst layer of the ion exchange membrane with a catalyst layer is disposed on the cathode side.
[16] The electrolytic hydrogenation apparatus according to [15], wherein an aqueous electrolyte solution is supplied to an anode chamber in which the anode is disposed, and an aromatic compound is supplied to a cathode chamber in which the cathode is disposed.

### ADVANTAGEOUS EFFECTS OF INVENTION

According to the present invention, it is possible to provide an ion exchange membrane with a catalyst layer, an ion exchange membrane and an electrolytic hydrogenation apparatus, which can lower the electrolysis voltage and increase the current efficiency at the time of electrolytic hydrogenation of an aromatic compound.

### BRIEF DESCRIPTION OF DRAWINGS

Fig. 1 is a schematic cross-sectional view illustrating an example of the ion exchange membrane with a catalyst layer of the present invention.
Fig. 2 is a partially enlarged view of the schematic cross-sectional view illustrating an example of the ion exchange membrane with a catalyst layer of the present invention.
Fig. 3 is a schematic cross-sectional view illustrating an example of the ion exchange membrane of the present invention.
Fig. 4 is a schematic view illustrating an example of the electrolytic hydrogenation apparatus of the present invention.

### DESCRIPTION OF EMBODIMENTS

The following definitions of terms apply throughout this specification and the claims.

An "ion exchange membrane" is a membrane containing a polymer having ion exchange groups.

An "ion exchange group" is a group capable of exchanging at least some of ions contained in this group to other ions, and the following carboxylic acid type functional group, sulfonic acid type functional group, etc. may be mentioned.

A "carboxylic acid type functional group" means a carboxylic acid group (-COOH) or a carboxylic acid base (-COOM1, where M¹ is an alkali metal or quaternary ammonium base).

A "sulfonic acid type functional group" means a sulfonic acid group (-SO₃H) or a sulfonic acid base (-SO₃M², where M² is an alkali metal or quaternary ammonium base).

A "precursor layer" is a layer (membrane) containing a polymer having groups that can be converted to ion exchange groups.

The term "groups that can be converted to ion exchange groups" means groups that can be converted to ion exchange groups by a known treatment such as hydrolysis treatment, acidification treatment, or the like.

The term "groups that can be converted to sulfonic acid type functional groups" means groups that can be converted to sulfonic acid type functional groups by a known treatment such as hydrolysis treatment, acidification treatment, or the like.

A "fluorinated polymer" means a polymer compound having fluorine atoms in its molecule.

A "perfluorocarbon polymer" means a polymer in which all hydrogen atoms bonded to carbon atoms in the polymer are replaced by fluorine atoms. Some of the fluorine atoms in a perfluorocarbon polymer may be replaced by either one or both of chlorine and bromine atoms.

A "monomer" means a compound having a polymerization-reactive carbon-carbon unsaturated double bond.

A "fluorinated monomer" means a monomer having fluorine atoms in its molecule.

A "constituting unit" means a portion derived from a monomer, present in a polymer to constitute the polymer. For example, in a case where the constituting unit is generated by addition polymerization of a monomer having a carbon-carbon unsaturated double bond, the constituting unit derived from this monomer is the divalent constituting unit generated by cleavage of this unsaturated double bond. Otherwise, the constituting unit may be a constituting unit obtained by forming a polymer having the structure of a certain constituting unit and then chemically converting this constituting unit, e.g., by hydrolysis treatment. Further, in the following, in some cases, the constituting unit derived from an individual monomer may be described by the name of the monomer by putting "unit" to its monomer name.

A "reinforcing material" means a material to be used to increase the strength of an ion exchange membrane. The reinforcing material is a material derived from a reinforcing fabric.

A "reinforcing fabric" means a fabric to be used as a raw material for a reinforcing material to improve the strength of an ion exchange membrane.

A "reinforcing yarn" is a yarn that constitutes a reinforcing fabric and is a yarn made of a material that will not be eluted even when the reinforcing fabric is immersed in an aqueous alkaline solution (e.g. an aqueous sodium hydroxide solution with a concentration of 32 mass%).

A "sacrificial yarn" is a yarn that constitutes a reinforcing fabric and is a yarn containing a material that will be eluted by an aqueous alkaline solution and/or a process solution (e.g. an electrolyte solution or aromatic compound to be used for electrolytic hydrogenation of an aromatic compound).

An "elution pore" means a pore formed as a result of elution of a sacrificial yarn in an aqueous alkaline solution.

A "reinforced precursor membrane" means a membrane having a reinforcing fabric disposed in a precursor layer.

A numerical range expressed by using " to " means a range that includes the numerical values listed before and after " to " as the lower and upper limit values.

The thickness of each layer at the time when an ion exchange membrane with a catalyst layer is dried, is determined by observing the cross section of the ion exchange membrane with a catalyst layer by an optical microscope after drying the ion exchange membrane with an catalyst layer at 90°C for 2 hours and using an imaging software. In a case where a convexoconcave structure is present at the surface of a layer, the thicknesses of 10 concave points in the layer and the thicknesses of 10 convex points in the layer are measured, and the arithmetic mean value of the total of 20 points is taken as the thickness of the layer.

The "TQ value" is a value related to the molecular weight of a polymer and represents the temperature at which the volumetric flow rate shows 100 mm³ /sec.

The volumetric flow rate is a value showing, by a unit of mm³/sec., the amount of a polymer flowing out at the time of letting the polymer be melted and flow out from an orifice (diameter: 1 mm, length: 1 mm) at a constant temperature under a pressure of 3 MPa. The higher the TQ value, the higher the molecular weight.

The "ion exchange capacity" is a value calculated as follows. First, a fluorinated polymer is placed for 24 hours in a glove box with dry nitrogen flowing, and the dry mass of the fluorinated polymer is measured. Then, the fluorinated polymer is immersed in a 2 mol/L aqueous sodium chloride solution at 60°C for 1 hour. After washing the fluorinated polymer with ultrapure water, it is taken out, and by titrating the solution in which the fluorinated polymer was immersed, with a 0.1 mol/L aqueous sodium hydroxide solution, to obtain the ion exchange capacity of the fluorinated polymer.

### [Ion exchange membrane with catalyst layer]

The ion exchange membrane with a catalyst layer of the present invention has an inorganic particle layer containing inorganic particles and a binder, a layer (Sa) containing a first fluorinated polymer having sulfonic acid type functional groups (hereinafter referred to also as "fluorinated polymer (S1)"), a layer (S2) containing a second fluorinated polymer having sulfonic acid type functional groups (hereinafter referred to also as "fluorinated polymer (S2)"), and a catalyst layer, in this order.

Here, the ion exchange capacity of the above fluorinated polymer (S1) is lower than the ion exchange capacity of the above fluorinated polymer (S2).

The ion exchange membrane with a catalyst layer of the present invention is preferably used for electrolytic hydrogenation of an aromatic compound. At the time when the ion exchange membrane with a catalyst layer of the present invention is applied to an electrolytic hydrogenation apparatus, the inorganic particle layer is disposed on the anode side and the catalyst layer is disposed on the cathode side, whereby the electrolysis voltage can be lowered and the current efficiency can be increased at the time of electrolytic hydrogenation of an aromatic compound.

The details of the reason for this are not clarified, but are assumed to be due to the following reason.

In an electrolytic hydrogenation apparatus, an ion exchange membrane with a catalyst layer is disposed in the electrolyzer to separate an anode chamber in which an anode is disposed and a cathode chamber in which a cathode is disposed, whereby an aqueous electrolyte solution is supplied to the anode chamber and an aromatic compound is supplied to the cathode chamber. It is considered that at the time when the electrolytic hydrogenation apparatus is driven, protons (H⁺) generated by the electrolysis of water in the anode chamber will move to the cathode side through the ion exchange membrane with a catalyst layer, and hydrogenation of an aromatic compound by proton addition will occur near the surface of the catalyst layer.

Here, the hydrogenation reaction of the aromatic compound on the cathode side occurs on the catalyst layer. Specifically, it is considered that hydrogen activated on the catalyst in the catalyst layer comes into contact with the aromatic compound, and electrons will flow into there, whereby hydrogenation of the aromatic compound occurs.

However, the presence of water around the catalyst makes it difficult for the aromatic compound to approach the reaction field around the catalyst. As a result, the activated hydrogen will react with electrons to generate hydrogen in the cathode chamber, resulting in a problem that the current efficiency will decrease.

On the other hand, an electrolyte membrane with a low ion exchange capacity allows less water to pass through than an electrolyte membrane with a high ion exchange capacity, thus allowing the current efficiency to be higher but increasing the electrolysis voltage.

Further, an electrolyte membrane with a high ion exchange capacity allows water to pass through more easily than an electrolyte membrane with a low ion exchange capacity, thus lowering the current efficiency, but capable of reducing the electrolysis voltage.

As a result of considering the above matters, the present inventors have made the electrolyte membrane into a multi-layer structure, by disposing a layer (Sa) containing a fluorinated polymer (S1) with a low ion exchange capacity on the anode side and disposing a layer (Sb) containing a fluorinated polymer (S2) with a high ion exchange capacity on the cathode side, whereby they have found that water migration from the anode chamber to the cathode chamber is suppressed, and the current efficiency can be improved. They have also found that by using such an electrolyte membrane, electrolysis at a low voltage becomes to be possible.

Here, in electrolytic hydrogenation of an aromatic compound using an electrolytic hydrogenation apparatus, an aqueous electrolyte solution is supplied to the anode chamber and an aromatic compound is supplied to the cathode chamber. In this case, when an ion exchange membrane with a catalyst layer having a single-layer electrolyte membrane is used, the anode chamber side surface of the electrolyte membrane contacts the aqueous electrolyte solution, and the cathode chamber side of the electrolyte membrane contacts the aromatic compound. Then, the ion exchange membrane with a catalyst layer may wrinkle due to the difference in the degree of swelling between the opposite surfaces of the ion exchange membrane with a catalyst layer. As a result, there may be a case where an increase in the electrolysis voltage, or a decrease in the current efficiency occurs.

With respect to this problem, the present inventors have found that by disposing a layer (Sa) containing a fluorinated polymer (S1) on the anode side and disposing a layer (S2) containing a fluorinated polymer (S2) on the cathode side, it is possible to suppress formation of wrinkles of the ion exchange membrane with a catalyst layer. This is presumably due to the following reason.

The fluorinated polymer (S1) has a lower ion exchange capacity as compared to the fluorinated polymer (S2), whereby it is less likely to be swollen by moisture. On the other hand, the fluorinated polymer (S2) has a higher ion exchange capacity as compared to the fluorinated polymer (S1), whereby it is less likely to be swollen by an organic solvent (aromatic compound). Therefore, the degree of swelling of the fluorinated polymer (S1) by moisture and the degree of swelling of the fluorinated polymer (S2) by the aromatic compound are balanced each other, whereby it is considered possible to suppress formation of wrinkles at the surface of the ion exchange membrane with a catalyst layer.

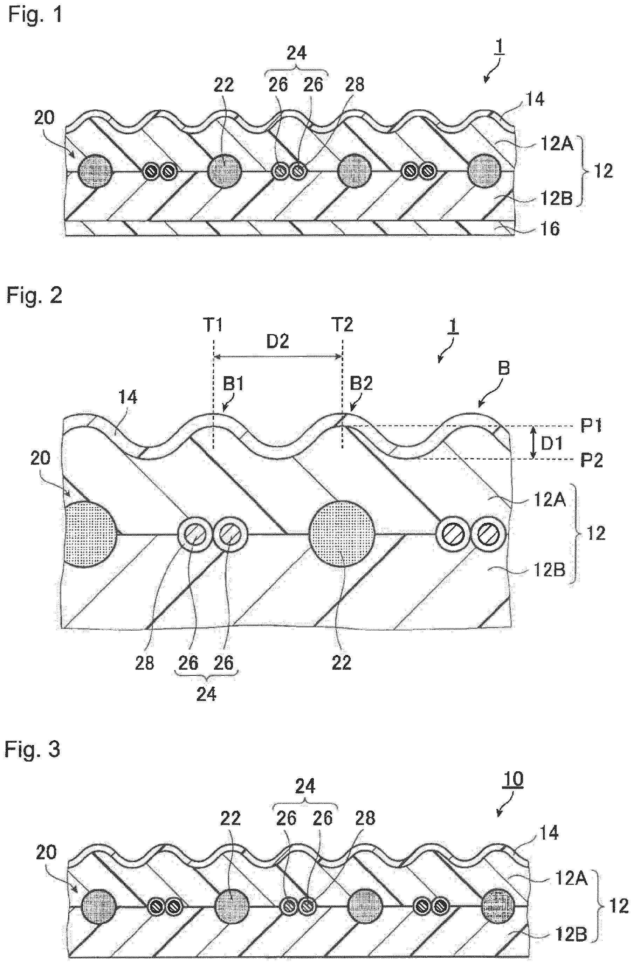

In the following, the ion exchange membrane with a catalyst layer of the present invention will be described based on Fig. 1, but the present invention is not limited to the contents of Fig. 1.

Fig. 1 is a schematic cross-sectional view illustrating an example of the ion exchange membrane with a catalyst layer of the present invention. As shown in Fig. 1, an ion exchange membrane 1 with a catalytic layer, has an electrolyte 12 consisting of a layer 12A as a layer (Sa) and a layer 12B as a layer (Sb), an inorganic particle layer 14 disposed on the surface of the layer 12A, and a catalyst layer 16 disposed on the surface of the layer 12B, and a reinforcing material 20 is disposed in the electrolyte membrane 12.

### <Layer (Sa)>

The layer 12A which is a layer (Sa), may be any layer containing a fluorinated polymer (S1), but is preferably a layer consisting solely of a fluorinated polymer (S1) that does not contain any material other than the fluorinated polymer (S1). That is, the layer (Sa) is preferably a layer consisting of a fluorinated polymer (S1).

In a case where an ion exchange membrane 1 with a catalytic layer is applied to the electrolytic hydrogenation apparatus as described below, the layer 12A will be disposed on the anode side than the layer 12B.

The thickness of the layer 12A when dried, is preferably from 5 to 60 µm, more preferably from 10 to 40 µm, particularly preferably from 10 to 30 µm. When the thickness of the layer 12A when dried, is at least the above lower limit value, the mechanical strength of the ion exchange membrane 1 with a catalyst layer will be improved and the current efficiency will be better. When the thickness of the layer 12A when dried, is at most the above upper limit value, the electrical resistance of the ion exchange membrane 1 with a catalyst layer can be suppressed to be low.

As shown in Fig. 1, the layer 12A preferably has a convexoconcave structure at the interface on the inorganic particle layer 14 side. When the interface on the inorganic particle layer 14 side has a convexoconcave structure, the aqueous electrolyte solution tends to be more easily supplied between the anode and the anode side of the ion exchange membrane 1 with a catalyst layer (i.e. the inorganic particle layer 14 side of the layer 12A, and further, the aqueous electrolyte solution tends to be more easily drained. This prevents a decrease in the effective electrolytic area, whereby it is possible to suppress an increase in the electrolysis voltage.

In the present invention, the convexoconcave structure at the interface on the inorganic particle layer side in the layer (Sa) means a structure having a plurality of structures which rise in the in-plane direction from the layer (Sb) toward the inorganic particle layer (hereinafter referred to also as "convex portions"), wherein the minimum distance from the vertex of the convex portion to the lowest position of the convex portion (hereinafter referred to also as the "height of the convex portion") is at least 2 µm.

Fig. 2 is a partially enlarged view of the cross section of the ion exchange membrane with a catalyst layer of the present invention. In the example of Fig. 2, the layer 12A has a plurality of convex portions B continuously formed at the interface on the inorganic particle layer 14 side. The height of a convex portion B corresponds to the shortest distance D1 from the position P1 corresponding to the vertex of the convex portion B (convex portion B2) to the lowest position P2 of the convex portion B (convex portion B2).

The height of a convex portion will be measured as follows.

First, the ion exchange membrane with a catalyst layer is cut along the thickness direction, and a magnified image (e.g. 100 magnifications) of the cross section of the ion exchange membrane with a catalyst layer is photographed by an optical microscope (product name: "BX-51", manufactured by Olympus Corporation). Next, from the photographed magnified image, the height of the convex portion at the interface on the inorganic particle layer 14 side in the layer 12A (the shortest distance D1 in Fig. 2) is measured.

The height of the convex portion is at least 2 µm, and, from the viewpoint of better current efficiency, preferably from 2 to 80 µm, particularly preferably from 10 to 50 µm.

The convex portions are preferably formed continuously in the in-plane direction of the layer (Sa) and are preferably formed at a periodic pitch.

In a case where the surface on the inorganic particle layer side of the layer (Sa) has a convexoconcave structure, the average distance between vertexes of the convex portions is preferably from 20 to 500 µm, more preferably from 50 to 400 µm, particularly preferably from 100 to 300 µm.

In the present invention, the average distance between vertexes of the convex portions means the shortest distance between vertexes of adjacent convex portions, which is the arithmetic mean value among vertexes of different 10 points.

In the example in Fig. 2, the shortest distance between vertexes of adjacent convex portions corresponds to the shortest distance D2 from position T1 corresponding to the vertex of convex portion B1 to position T2 corresponding to the vertex of convex portion B2 adjacent to convex portion B1.

The shortest distance between vertexes of adjacent convex portions is measured by using the magnified image as described in the above measurement of the height of the convex portions.

Specific examples of the method for forming a convexoconcave structure at the interface on the inorganic particle layer side of the layer (Sa) may be a method of blast treating the layer (Sa), a method of heat-pressing the layer (Sa) and a film or metal mold having a convexoconcave structure, a method of heat-pressing the layer (Sa) and solid particles and then removing the particles, a method of using a film or metal mold having a convexoconcave structure at the time of forming the layer (Sa), and a method of forming a layer (Sa) on a film having a convexoconcave structure.

Further, it is possible to use a method of stacking a layer (Sa), a reinforcing material and a layer (Sb) in this order, followed by conducting vacuum suction. It is thereby possible to form a convexoconcave structure corresponding to the surface shape of the reinforcing material, on the surface of the layer (Sa).

The method of using a film having a convexoconcave structure at the time of forming a layer (Sa) is preferred, because it is relatively simple, and a film with a stabilized performance can be obtained due to less impurity contamination by treatment.

The film having a convexoconcave structure is preferably polyethylene or polypropylene, from the viewpoint of molding processability and chemical resistance.

Here, in the example in Fig. 1, a case where the layer 12A has a convexoconcave structure at the interface on the inorganic particle layer 14 side, is shown, but without being limited to this case, the interface on the inorganic particle layer 14 side in the layer 12A may not have a convexoconcave structure.

### (Fluorinated polymer (S1))

The layer (Sa) may contain one type of fluorinated polymer (S1) alone, or may contain two or more types of fluorinated polymer (S1).

The layer (Sa) may contain polymers other than the fluorinated polymer (S1) (hereafter referred to also as other polymers), but preferably consists substantially of the fluorinated polymer (S1). "Consists substantially of the fluorinated polymer (S1)" means that, to the total mass of polymers in the layer (Sa), the content of the fluorinated polymer (S1) is at least 90 mass%. The upper limit of the content of the fluorinated polymer (S1) is 100 mass% to the total mass of polymers in the layer (Sa).

Specific examples of other polymers may be polymers of heterocyclic compounds containing one or more nitrogen atoms in the ring, as well as one or more polyazole compounds selected from the group consisting of polymers of heterocyclic compounds containing one or more nitrogen atoms and oxygen and/or sulfur atoms in the ring.

Specific examples of the polyazole compounds may be polyimidazole compounds, polybenzimidazole compounds, polybenzobisimidazole compounds, polybenzoxazole compounds, polyoxazole compounds, polythiazole compounds, and polybenzothiazole compounds.

Further, from the viewpoint of oxidation resistance of the ion exchange membrane with a catalyst layer, as other polymers, polyphenylene sulfide resins and polyphenylene ether resins may also be mentioned.

The fluorinated polymers (S1) preferably contains units based on a fluorinated olefin, as well as units having sulfonic acid type functional groups and fluorine atoms.

As the fluorinated olefin, for example, a C₂₋₃ fluoroolefin having one or more fluorine atoms in the molecule may be mentioned. Specific examples of the fluoroolefin may be tetrafluoroethylene (hereinafter referred to also as "TFE"), chlorotrifluoroethylene, vinylidene fluoride, vinyl fluoride, and hexafluoropropylene. Among them, TFE is preferred from the viewpoint of the production cost of the monomer, reactivity with other monomers, and properties of the obtainable fluorinated polymer (S1).

As the fluorinated olefin, one type may be used alone, or two or more types may be used in combination.

As units having sulfonic acid type functional groups and fluorine atoms, units represented by the formula (1) are preferred.

Formula (1) -[CF₂-CF(-L-(SO₃M)ₙ)]-

In the formula (1), L is an n+1-valent perfluorohydrocarbon group which may contain an etheric oxygen atom.

The etheric oxygen atom may be located at a terminal in the perfluorohydrocarbon group, or may be located between carbon-carbon atoms.

The number of carbon atoms in the n+1-valent perfluorohydrocarbon group is preferably at least 1, particularly preferably at least 2, and preferably at most 20, particularly preferably at most 10.

L is an n+1-valent perfluoroaliphatic hydrocarbon group which may contain an etheric oxygen atom, and particularly preferably is a divalent perfluoroalkylene group which may contain an etheric oxygen atom, as an embodiment where n=1, or a trivalent perfluoroaliphatic hydrocarbon group which may contain an etheric oxygen atom, as an embodiment where n=2.

The above divalent perfluoroalkylene group may be linear or branched-chain.

M is a hydrogen atom, an alkali metal or a quaternary ammonium cation. n is 1 or 2.

As units represented by the formula (1), units represented by the formula (1-1), units represented by the formula (1-2), units represented by the formula (1-3), or units represented by the formula (1-4) are preferred.

Formula (1-1) -[CF₂-CF(-O-R^{f1}-SO₃M)]-

Formula (1-2) -[CF₂-CF(-R^{f1}-SO₃M)]-

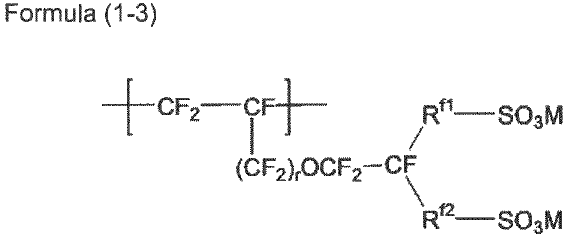

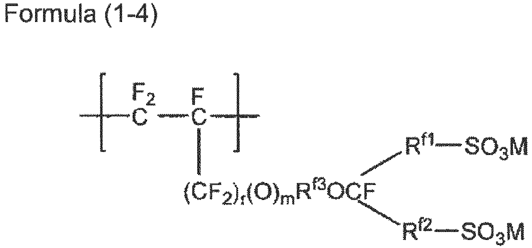

R^{f1} is a perfluoroalkylene group which may contain an oxygen atom between carbon-carbon atoms. The number of carbon atoms in the above perfluoroalkylene group is preferably at least 1, particularly preferably at least 2, preferably at most 20, particularly preferably at most 10.

R^{f2} is a single bond or a perfluoroalkylene group which may contain an oxygen atom between carbon-carbon atoms. The number of carbon atoms in the above perfluoroalkylene group is preferably at least 1, particularly preferably at least 2, preferably at most 20, particularly preferably at most 10.

R^{f3} is a single bond or a perfluoroalkylene group which may contain an oxygen atom between carbon-carbon atoms. The number of carbon atoms in the above perfluoroalkylene group is preferably at least 1, particularly preferably at least 2, preferably at most 20, particularly preferably at most 10.
r is 0 or 1.
m is 0 or 1.
M is a hydrogen atom, an alkali metal or a quaternary ammonium cation.

The units represented by the formula (1-1) and formula (1-2) are more preferably units represented by the formula (1-5).

Formula (1-5) -[CF₂-CF(-(CF₂)ₓ-(OCF₂CFY)_{y}-O-(CF₂)_{z}-SO₃M)]

x is 0 or 1, y is an integer of from 0 to 2, and z is an integer of from 1 to 4, and Y is F or CF₃. M is as described above.

As specific examples of the units represented by the formula (1-1), the following units may be mentioned. In the formulas, w is an integer of from 1 to 8, and x is an integer of from 1 to 5. The definition of M in the formulas is as described above.

-[CF₂-CF(-O-(CF2)_{w}-SO₃M)]-

-[CF₂-CF(-O-CF₂CF(CF₃)-O-(CF₂)_{w}-SO₃M)]-

-[CF₂-CF(-(O-CF₂CF(CF₃))ₓ-SO₃M)]-

As specific examples of the units represented by the formula (1-2), the following units may be mentioned. In the formulas, w in the formulas is an integer of from 1 to 8. The definition of M in the formulas is as described above.

-[CF₂-CF(-(CF2)_{w}-SO₃M)]-

-[CF₂-CF(-CF₂-O-(CF₂)_{w}-SO₃M)]-

As the units represented by the formula (1-3), units represented by the formula (1-3-1) are preferred. The definition of M in the formula is as described above.

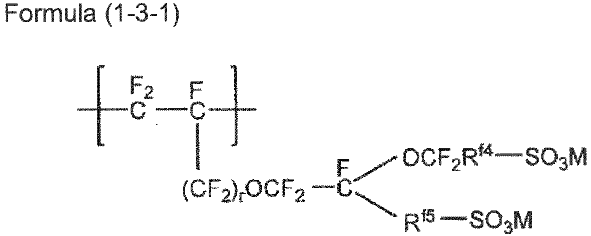

R^{f4} is a C₁₋₆ linear perfluoroalkylene group, and R^{f5} is a single bond or a C₁₋₆ linear perfluoroalkylene group which may contain an oxygen atom between carbon-carbon atoms. The definitions of r and M are as described above.

As specific examples of the units represented by the formula (1-3-1), the following may be mentioned.

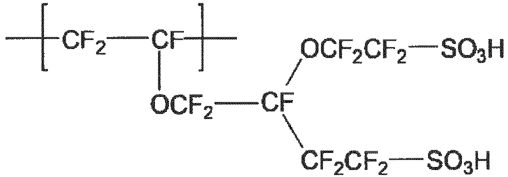

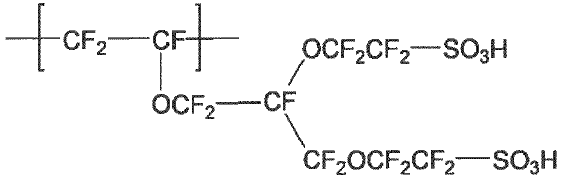

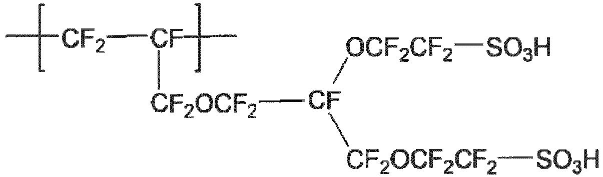

As the units represented by the formula (1-4), units represented by the formula (1-4-1) are preferred. The definitions of R^{f1}, R^{f2} and M in the formula are as described above.

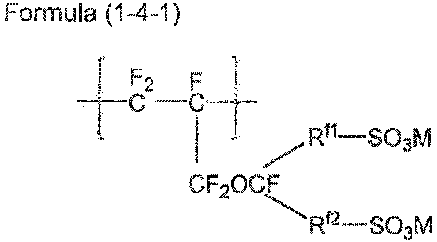

As a specific example of the units represented by the formula (1-4-1), the following may be mentioned.

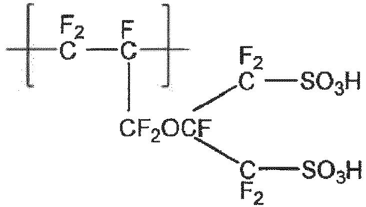

As the units having sulfonic acid type functional groups and fluorine atoms, one type may be used alone, or two or more types may be used in combination.

The fluorinated polymer (S1) may contain units based on a fluorinated olefin and units based on monomers other than those having sulfonic acid-type functional groups and fluorine atoms (hereinafter referred to as other monomers).

As examples of other monomers, CF₂=CFR^{f6} (where R^{f6} is a C₂₋₁₀ perfluoroalkyl group), CF₂=CF-OR^{f7} (where R^{f7} is a C₁₋₁₀ perfluoroalkyl group), and CF₂=CFO(CF₂)ᵥCF=CF₂ (where v is an integer of from 1 to 3) may be mentioned.

The content of the units based on other monomers is preferably at most 30 mass% to all units in the fluorinated polymer (S1), from the viewpoint of maintaining ion exchange performance.

The ion exchange capacity of the fluorinated polymer (S1) is preferably from 0.5 to 1.1 milliequivalents/gram dry resin, more preferably from 0.6 to 1.1 milliequivalents/gram dry resin, particularly preferably from 0.6 to 1.0 milliequivalents/gram dry resin.

When the ion exchange capacity of the fluorinated polymer (S1) is at least the above lower limit value, the electrical resistance of the ion exchange membrane 1 with a catalyst layer will be low, and the electrolysis voltage can be made to be lower. Further, when the ion exchange capacity of the fluorinated polymer (S1) is at most the above upper limit value, the current efficiency will be better.

### <Layer (Sb)>

Layer 12B which is layer (Sb), may be any layer so long as it contains a fluorinated polymer (S2), but is preferably a layer consisting solely of a fluorinated polymer (S2) which does not contain any material other than the fluorinated polymer (S2). That is, the layer (Sb) is preferably a layer consisting of a fluorinated polymer (S2).

In a case where the ion exchange membrane 1 with a catalyst layer is applied to the electrolytic hydrogenation apparatus as described later, the layer 12B is disposed on the cathode side than the layer 12A.

In Fig. 1, the layer 12B is shown as a single layer, but it may be a layer formed from multiple layers. In a case where the layer 12B is formed from multiple layers, the construction may be made so that in the respective layers, the types of constituent units constituting the fluorinated polymer (S2) or the ratios of the constituent units having sulfonic acid type functional groups, are different.

Further, in a case where the layer 12B is formed from multiple layers, the ion exchange capacity of the fluorinated polymer (S2) contained in each layer is higher than the ion exchange capacity of the fluorinated polymer (S1) contained in the layer 12A.

In addition, in a case where the layer 12B is formed from multiple layers, it is preferred that the respective layers of the layer 12B are disposed so that the ion exchange capacity becomes to be higher from the inorganic particle layer 14 towards the catalyst layer 16. It is thereby possible to suppress delamination between the respective layers constituting the layer 12B.

The thickness of the layer 12B when dried (the total thickness in a case where the layer 12B is formed from multiple layers) is preferably from 50 to 500 µm, more preferably from 50 to 200 µm, particularly preferably from 50 to 150 µm. When the thickness of the layer 12B when dried is at least the above lower limit value, the mechanical strength of the ion exchange membrane 1 with a catalyst layer will be improved, and the current efficiency will be better. When the thickness of the layer (Sb) 12B when dried is at most the above upper limit value, the electrical resistance of the ion exchange membrane 1 with a catalyst layer can be suppressed to be low.

### (Fluorinated polymer (S2))

The layer (Sb) may contain one type of fluorinated polymer (S2) alone, or two or more types of fluorinated polymer (S2).

The layer (Sb) may contain polymers other than the fluorinated polymer (S2), but it preferably consists substantially of the fluorinated polymer (S2). "Consists substantially of the fluorinated polymer (S2)" means that the content of the fluorinated polymer (S2) is at least 90 mass%, to the total mass of polymers in the layer (Sb). The upper limit of the content of the fluorinated polymer (S2) is 100 mass% to the total mass of polymers in the layer (Sb).

Specific examples of polymers other than the fluorinated polymer (S2) are the same as the above-mentioned polymers (other polymers) other than the fluorinated polymer (S1).

As the fluorinated polymer (S2), it is preferred to use the same polymer as the fluorinated polymer (S1) except that the ion exchange capacity is different.

Each of the ion exchange capacities of the fluorinated polymer (S1) and the fluorinated polymer (S2) can be adjusted by changing the content of ion exchange groups in the fluorinated polymer (S1) or the fluorinated polymer (S2).

The ion exchange capacity of the fluorinated polymer (S2) is preferably from 0.7 to 2.0 milliequivalents/gram dry resin, more preferably from 0.7 to 1.5 milliequivalents/gram dry resin, further preferably from 0.7 to 1.4 milliequivalents/gram dry resin, particularly preferably from 0.8 to 1.4 milliequivalents/gram dry resin.

When the ion exchange capacity of the fluorinated polymer (S2) is at least the above lower limit value, the electrical resistance of the ion exchange membrane with a catalyst layer will be low, and the electrolysis voltage can be made to be lower. When the ion exchange capacity of the fluorinated polymer (S2) is at most the above upper limit value, the current efficiency will be better.

In a case where the layer (Sb) is a monolayer, the absolute value of the difference between the ion exchange capacity of the fluorinated polymer (S1) and the ion exchange capacity of the fluorinated polymer (S2) is preferably from 0.1 to 1.4 milliequivalents/gram dry resin, more preferably from 0.1 to 0.65 milliequivalents/gram dry resin, further preferably from 0.1 to 0.6 milliequivalents/gram dry resin, particularly preferably from 0.1 to 0.5 milliequivalents/gram dry resin, from such a viewpoint that the effect of the invention will be better exhibited.

In a case where the layer (Sb) is formed from multiple layers, the absolute value of the difference between the ion exchange capacity of the fluorinated polymer (S1) and the ion exchange capacity of the fluorinated polymer (S2) contained in the layer positioned most toward the layer (Sa) side among the layers constituting the layer (Sb) is preferably from 0.1 to 1.4 milliequivalents/gram dry resin, more preferably from 0.1 to 0.65 milliequivalents/gram dry resin, particularly preferably from 0.1 to 0.5 milliequivalents/gram dry resin, from such a viewpoint that the effect of the present invention will be better exhibited.

In a case where the layer (Sb) is formed from multiple layers, the absolute value of the difference in the ion exchange capacity of the fluorinated polymer (S2) contained in each layer constituting the layer (Sb) is preferably from 0.1 to 0.65 milliequivalents/gram dry resin, more preferably from 0.1 to 0.5 milliequivalents/gram dry resin, particularly preferably from 0.1 to 0.3 milliequivalents/gram dry resin, from such a viewpoint that the effect of the present invention will be better exhibited.

### <Inorganic particle layer>

The inorganic particle layer 14 is a layer containing inorganic particles and a binder and is disposed on the surface on the opposite side to the disposed surface of the layer 12B in the layer 12A.

If oxygen gas produced by electrolysis of an aqueous electrolyte solution adheres to the surface of the layer (Sa), the electrolysis voltage becomes higher at the time of electrolytic hydrogenation of an aromatic compound. The inorganic particle layer is provided to suppress the adhesion of oxygen gas produced by electrolysis of an aqueous electrolyte solution, to the surface of the layer (Sa) and to suppress the increase of the electrolysis voltage.

The thickness of the inorganic particle layer 14 is preferably from 1 to 50 µm, more preferably from 1 to 30 µm, particularly preferably from 1 to 20 µm, from such a viewpoint that the electrolysis voltage can be better reduced.

As the inorganic particles, those having hydrophilic properties are preferred. Specifically, at least one type selected from the group consisting of oxides, nitrides and carbides of group 4 elements or group 14 elements, is preferred; SiO₂, SiC, ZrO₂ and ZrC are more preferred, and ZrO₂ is particularly preferred.

The average particle diameter of the inorganic particles is preferably from 0.01 to 10 µm, more preferably from 0.01 to 5 µm, further preferably from 0.5 to 3 µm. When the average particle diameter of the inorganic particles is at least the above lower limit value, a high gas adhesion suppression effect can be obtained. When the average particle diameter of the inorganic particles is at most the above upper limit value, the inorganic particles will have excellent resistance to dropout.

The average particle diameter of the inorganic particles is the value of the 50% diameter (D₅₀) obtainable by calculating the volume average from the particle size distribution when a dispersion having the inorganic particles dispersed in a solvent is measured by a known particle size distribution measuring device using the laser diffraction and scattering method as the measuring principle (a laser diffraction and scattering particle size distribution measuring device manufactured by MicrotracBEL or a similar device).

As the binder, a hydrophilic one is preferred; a fluorinated polymer containing carboxylic acid groups or sulfonic acid groups is preferred; and a fluorinated polymer containing sulfonic acid groups is more preferred. The fluorinated polymer may be a homopolymer of a monomer having a carboxylic acid or a sulfonic acid group, or a copolymer of a monomer having a carboxylic acid group or a sulfonic acid group and a monomer which can copolymerize with this monomer.

The mass ratio of the binder to the total mass of the inorganic particles and the binder in the inorganic particle layer (hereinafter referred to also as the "binder ratio") is preferably from 0.1 to 0.5. When the binder ratio in the inorganic particle layer is at least the above lower limit value, the inorganic particles will have excellent resistance to dropout. When the binder ratio in the inorganic particle layer is at most the above upper limit value, a high gas adhesion inhibiting effect can be obtained.

In a case where the surface on the inorganic particle layer side in the layer (Sa) has a convexoconcave structure, the inorganic particle layer preferably has a surface shape of a convexoconcave structure which follows the convexoconcave structure of the layer (Sa) (see Fig. 1).

### <Catalyst layer>

The catalyst layer 16 is a layer containing a catalyst, and is disposed on the surface on the opposite side to the disposition surface of the layer 12A in the layer 12B.

Specific examples of the catalyst may be a supported catalyst containing platinum, a platinum alloy or platinum having a core-shell structure on a carbon support, an iridium oxide catalyst, an alloy containing iridium oxide, and a catalyst containing iridium oxide having a core-shell structure. As the carbon support, a carbon black powder may be mentioned.

The catalyst layer 16 may further contain a polymer having ion-exchange groups with a view to inhibiting dropout of the catalyst. As the polymer having ion-exchange groups, a fluorinated polymer having ion-exchange groups may be mentioned.

The example in Fig. 1 shows a case where the catalyst layer 16 is formed on the surface of the layer 12B, so-called a zero-gap structure, but, without being limited to this case, the catalyst layer 16 may be formed on the layer 12B via another layer. That is, another layer may be formed between the catalyst layer 16 and the layer 12B.

For example, a carbon felt which functions as a cathode and a gas diffusion layer may be provided on the surface of the layer (Sb), and a catalyst layer may be formed on the surface of the carbon felt.

### <Reinforcing material>

The reinforcing material 20 is disposed in the electrolyte 12.

The reinforcing material 20 is a material which reinforces the electrolyte membrane 12 and is derived from a reinforcing fabric. The reinforcing fabric consists of warp and weft yarns, and the warp and weft yarns are preferably orthogonal to each other. As shown in Fig. 1, the reinforcing fabric may have a reinforcing yarn 22 and a sacrificial yarn 24, but may not have a sacrificial yarn 24.

As the reinforcing yarn 22, a yarn containing a perfluorocarbon polymer is preferred; a yarn containing polytetrafluoroethylene (hereinafter referred to also as "PTFE") is more preferred; and a PTFE yarn consisting solely of PTFE is further preferred.

The sacrificial yarn 24 is a yarn which is at least partially eluted by pretreatment (e.g. treatment of immersing a reinforcing precursor membrane in an aqueous alkaline solution) or by a process solution (i.e. an electrolyte solution or aromatic compound to be used for electrolytic hydrogenation of an aromatic compound).

Among them, the sacrificial yarn 24 is preferably a yarn which is eluted by the process solution. This makes it easier to handle the ion exchange membrane 1 with a catalytic layer, after the production of the ion exchange membrane 1 with a catalytic layer until before the conditioning operation of electrolytic hydrogenation of an aromatic compound, and also let the sacrificial yarn be dissolved during the operation of the electrolytic hydrogenation apparatus, whereby it is possible to further reduce the electrolysis voltage.

One sacrificial yarn 24 may be a monofilament consisting of a single filament or a multifilament consisting of two or more filaments.

As the sacrificial yarn 24, a PET yarn consisting solely of PET, a PET/PBT yarn consisting of a mixture of PET and polybutylene terephthalate (hereinafter referred to also as "PBT"), a PBT yarn consisting solely of PBT, or a PTT yarn consisting solely of polytrimethylene terephthalate (hereinafter referred to also as "PTT"), is preferred, and a PET yarn is more preferred.

In the example in Fig. 1, a portion of the sacrificial yarn 24 remains, and a dissolution hole 28 is formed around the dissolved remnant of the filament 26 of the sacrificial yarn 24. This makes damages such as cracks less likely to occur to the ion exchange membrane 1 with a catalyst layer at the time of handling of the ion exchange membrane 1 with a catalytic layer after the production of the ion exchange membrane 1 with a catalytic layer until before the conditioning operation for electrolytic hydrogenation of an aromatic compound, and at the time of installation of the ion exchange membrane 1 with a catalytic layer in the electrolyzer at the time of the conditioning operation.

The example in Fig. 1 shows an embodiment having a reinforcing material 20, but without being limited to this, the ion exchange membrane with a catalyst layer may not have a reinforcing material.

Further, in the example in Fig. 1, the reinforcing material 20 is disposed between the layer 12A and the layer 12B, but, the location of the reinforcing material is not limited to this, and, for example, it may be disposed in the layer 12A or in the layer 12B.

### <Method for producing ion exchange membrane with catalyst layer>

An example of the method for producing an ion exchange membrane with a catalyst layer of the present invention will be shown as follows. The method for producing the ion exchange membrane with a catalyst layer of the present invention preferably comprises the following steps (i) to (iv). It is thereby possible to obtain the above-described ion exchange membrane with a catalyst layer of the present invention.

Step (i): A step of obtaining a precursor membrane, in which a layer (Sa') containing a fluorinated polymer (S1') having groups which can be converted to sulfonic acid type functional groups and a layer (Sb') containing a fluorinated polymer (S2') having groups which can be converted to sulfonic acid type functional groups, are stacked in this order.

Step (ii): A step of forming an inorganic particle layer on the surface of the layer (Sa').

Step (iii): A step of converting groups which can be converted to sulfonic acid type functional groups in the precursor film, to sulfonic acid type functional groups.

Step (iv): A step of forming a catalyst layer on the surface of the layer (Sb').

Here, the operation order of steps (i) to (iv) is not particularly limited, but it is preferred to carry out the process steps in the order of step (i), step (ii), step (iii) and step (iv). Further, they may be carried out in the order of step (ii), step (i), step (iii) and step (iv).

In the following, an example of the method for producing an ion exchange membrane with a catalyst layer of the present invention will be described step by step.

### (Step (i))

As a method for producing the precursor membrane, a method of disposing a layer (Sa') containing a fluorinated polymer (S1') and a layer (Sb') containing a fluorinated polymer (S2') in this order and laminating them by using a laminating roll or vacuum laminating apparatus, may be mentioned.

The precursor membrane may be a reinforcing precursor membrane having a reinforcing material containing a reinforcing yarn. In this case, for example, the layer (Sa'), the reinforcing material and the layer (Sb') are disposed in this order, and the reinforcing precursor membrane is obtained in accordance with the above-described method.

The opposite surface to the disposition surface of the layer (Sb') in the layer (Sa') may be treated to have a convexoconcave structure by using any one of the methods described above.

By the later-described step (iii), the layer (Sa') containing a fluorinated polymer (S1') will be converted to a layer (Sa) containing a fluorinated polymer (S1), and the layer (Sb') containing a fluorinated polymer (S2') will be converted to a layer (Sb) containing a fluorinated polymer (S2).

The fluorinated polymer (S1') is preferably a copolymerized polymer of a fluorinated olefin and a monomer having a group which can be converted to a sulfonic acid type functional group, and fluorine atoms (hereinafter referred to also as a "fluorinated monomer (S1')").

As the method of copolymerization for a fluorinated polymer (S1'), a known method such as solution polymerization, suspension polymerization, emulsion polymerization, etc. may be employed.

As the fluorinated olefin, the above exemplified ones may be mentioned, and from the viewpoint of the production cost of the monomer, the reactivity with other monomers, and the excellent properties of the obtainable fluorinated polymer (S1), TFE is preferred.

As the fluorinated olefin, one type may be used alone, or two or more types may be used in combination.

As the fluorinated monomer (S1'), a compound having one or more fluorine atoms, an ethylenic double bond and a group that can be converted to a sulfonic acid type functional group, in the molecule, may be mentioned.

As the fluorinated monomer (S1'), from the viewpoint of the production cost of the monomer, the reactivity with other monomers, and the excellent properties of the obtainable fluorinated polymer (S1), a compound represented by the formula (2) is preferred.

Formula (2) CF₂=CF-L-(A)ₙ

The definitions of L and n in the formula (2) are as described above.

A is a group which can be converted to a sulfonic acid type functional group. As the group which can be converted to a sulfonic acid type functional group, a functional group which can be converted to a sulfonic acid type functional group by hydrolysis is preferred. Examples of the group which can be converted to a sulfonic acid type functional group may be -SO₂F, -SO₂Cl and -SO₂Br. When two A's are present in the formula (2), the A's may be the same or different from each other.

As the compound represented by the formula (2), a compound represented by the formula (2-1), a compound represented by the formula (2-2), a compound represented by the formula (2-3), a compound represented by formula (2-4) and a compound represented by the formula (2-5) are preferred.

Formula (2-1) CF₂=CF-O-R^{f1}-A

Formula (2-2) CF₂=CF-R^{f1}-A

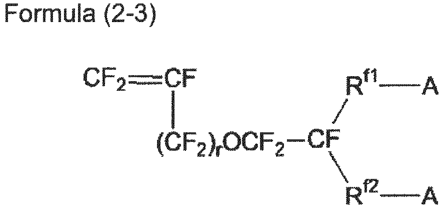

The definitions of R^{f1}, R^{f2}, r and A in the formula are as described above.

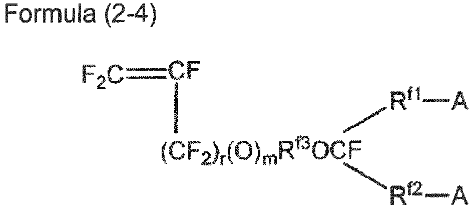

The definitions of R^{f1}, R^{f2}, R^{f3}, r, m and A in the formula are as described above.

Formula (2-5) CF₂=CF-(CF₂)ₓ-(OCF₂CFY)_{y}-O-(CF₂)_{z}-SO_{3M}

The definitions of M, x, y, z and Y in the formula are as described above.

As specific examples of the compound represented by formula (2-1), the following compounds may be mentioned. In the formula, w is an integer of from 1 to 8, and x is an integer of from 1 to 5.

CF₂=CF-O-(CF₂)_{w}-SO₂F

CF₂=CF-O-CF₂CF(CF₃)-O-(CF₂)_{w}-SO₂F

CF₂=CF-[O-CF₂CF(CF₃)]ₓ-SO₂F

As specific examples of the compound represented by the formula (2-2), the following compounds may be mentioned. w in the formulas is an integer of from 1 to 8.

CF₂=CF-(CF₂)_{w}-SO₂F

CF₂=CF-CF₂-O-(CF₂)_{w}-SO₂F

As the compound represented by the formula (2-3), a compound represented by the formula (2-3-1) is preferred.

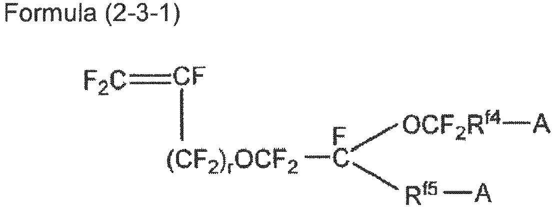

The definitions of R^{f4}, R^{f5}, r and A in the formula are as described above.

As specific examples of the compound represented by the formula (2-3-1), the following may be mentioned.

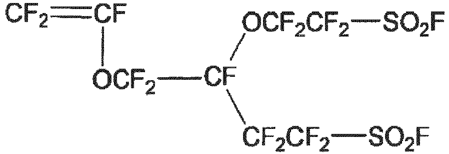

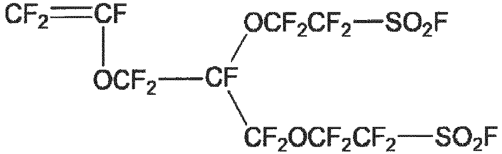

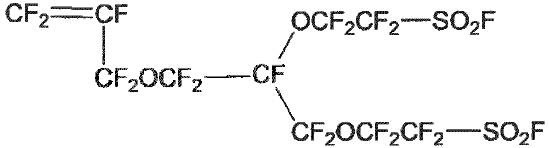

As the compound represented by the formula (2-4), a compound represented by the formula (2-4-1) is preferred.

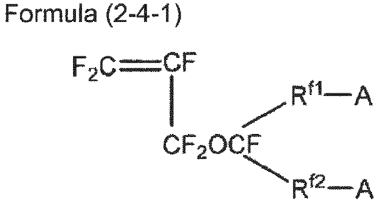

The definitions of R^{f1}, R^{f2} and A in the formula are as described above.

As specific examples of the compound represented by the formula (2-4-1), the following may be mentioned.

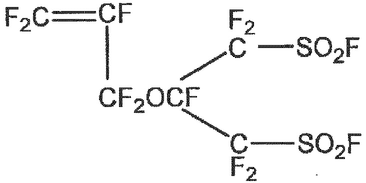

As the fluorinated monomer (S1'), one type may be used alone, or two or more types may be used in combination.

In the production of the fluorinated polymer (S1'), in addition to the fluorinated olefin and the fluorinated monomer (S1'), other monomers may also be used. As other monomers, those previously exemplified may be mentioned.

The range of the TQ value of the fluorinated polymer (S1') is preferably from 150 to 350°C, more preferably from170 to 300°C, further preferably from 200 to 250°C, from the viewpoint of the mechanical strength and the film formability as an ion exchange membrane with a catalyst layer.

As the fluorinated polymer (S2'), it is preferred to use the same polymer as the above fluorinated polymer (S1'), except that it is produced so that when converted to the fluorinated polymer (S2), the ion exchange capacity is different from the fluorinated polymer (S1').

### (Step (ii))

The method of forming the inorganic particle layer is not particularly limited. For example, there may be mentioned a method in which an inorganic particle dispersion containing inorganic particles, a binder and a solvent is coated on the surface of the layer (Sa'), and then, the coated layer of the inorganic particle dispersion is dried.

The coating and drying conditions are not particularly limited, and known conditions may be employed.

The inorganic particles and the binder to be contained in the inorganic particle dispersion are as described above. The solvent to be contained in the inorganic particle dispersion is not limited, and water or an organic solvent may be used.

### (Step (iii))

As a specific example of the method for converting groups which can be converted to sulfonic acid type functional groups in the precursor film, to the sulfonic acid type functional groups, a method of applying a treatment such as hydrolysis treatment or acidification treatment to the precursor membrane may be mentioned.

A method of contacting the precursor membrane with an aqueous alkaline solution is particularly preferred.

In a case where the above-mentioned reinforced precursor membrane is used as the precursor membrane, at least some of the sacrificial yarns in the reinforced precursor membrane will be hydrolyzed and eluted by the action of the aqueous alkaline solution.

As a specific example of the method of bringing the precursor membrane into contact with the aqueous alkaline solution, a method of immersing the precursor membrane in the aqueous alkaline solution or spray coating the precursor membrane surface with the aqueous alkaline solution may be mentioned.

The temperature of the aqueous alkaline solution is preferably from 30 to 100°C, particularly preferably from 40 to 100°C. The contact time between the precursor membrane and the aqueous alkaline solution is preferably from 3 to 150 minutes, particularly preferably from 5 to 50 minutes.

The aqueous alkaline solution preferably comprises an alkali metal hydroxide, a water-soluble organic solvent and water.

As the alkali metal hydroxide, sodium hydroxide and potassium hydroxide may be mentioned.

In this specification, a water-soluble organic solvent is an organic solvent which is readily soluble in water. Specifically, an organic solvent, of which the solubility in 1,000 mL (20°C) of water is at least 0.1 g, is preferred, and an organic solvent, of which the solubility is at least 0.5 g, is particularly preferred. The water-soluble organic solvent preferably contains at least one member selected from the group consisting of non-protonic organic solvents, alcohols and amino alcohols, and particularly preferably contains a non-protonic organic solvent.

As the water-soluble organic solvent, one type may be used alone, or two or more types may be used in combination.

As specific examples of the non-protonic organic solvent, dimethyl sulfoxide, N,N-dimethylformamide, N,N-dimethylacetamide, N-methyl-2-pyrrolidone and N-ethyl-2-pyrrolidone may be mentioned, and dimethyl sulfoxide is preferred.

As specific examples of the alcohol, methanol, ethanol, isopropanol, butanol, methoxyethoxyethanol, butoxyethanol, butylcarbitol, hexyloxyethanol, octanol, 1-methoxy -2-propanol and ethylene glycol, may be mentioned.

As specific examples of the amino alcohol, ethanolamine, N-methylethanolamine, N-ethylethanolamine, 1-amino-2-propanol, 1-amino-3-propanol, 2-aminoethoxyethanol, 2-aminothioethoxyethanol and 2-amino-2-methyl-1-propanol may be mentioned.

The concentration of the alkali metal hydroxide in the aqueous alkaline solution is preferably from 1 to 60 mass%, particularly preferably from 3 to 55 mass%.

The content of the water-soluble organic solvent in the aqueous alkaline solution is preferably from 1 to 60 mass%, particularly preferably from 3 to 55 mass%.

The concentration of water is preferably from 39 to 80 mass% in the aqueous alkaline solution.

After contact of the precursor membrane with the aqueous alkaline solution, treatment of removing the aqueous alkaline solution may be carried out. As the method for removing the aqueous alkaline solution, for example, a method of washing with water the precursor membrane which has been in contact with the aqueous alkaline solution, may be mentioned.

After contact of the precursor membrane with the aqueous alkaline solution, the obtained membrane may be contacted with an aqueous acidic solution to convert the ion exchange groups to the acid form.

As specific examples of the method of bringing the precursor membrane into contact with the aqueous acidic solution, a method of immersing the precursor membrane in the aqueous acidic solution, and a method of spray coating the surface of the precursor membrane with the aqueous acidic solution, may be mentioned.

The aqueous acid solution preferably comprises an acid component and water.

As specific examples of the acid component, hydrochloric acid and sulfuric acid may be mentioned.

### (Step (iv))

The method of forming the catalyst layer is not particularly limited, but, for example, a method of applying a catalyst dispersion comprising a catalyst, a polymer having ion-exchange groups and a solvent, to the surface of the layer (Sb'), and drying the applied layer of the catalyst dispersion solution, may be mentioned.

The coating and drying conditions are not particularly limited, and known conditions may be employed.

The catalyst and the polymer having ion-exchange groups to be contained in the catalyst dispersion are as described above. The solvent to be contained in the catalyst dispersion is not particularly limited, and water or an organic solvent may be used.

### [Ion exchange membrane]

The ion exchange membrane of the present invention has an inorganic particle layer containing inorganic particles and a binder, a layer (Sa) containing a first fluorinated polymer having sulfonic acid type functional groups, and a layer (Sb) containing a second fluorinated polymer having sulfonic acid type functional groups, in this order.

Further, the ion exchange capacity of the first fluorinated polymer is lower than the ion exchange capacity of the second fluorinated polymer.

Fig. 3 is a cross-sectional view showing an example of the ion exchange membrane of the present invention. As shown in Fig. 3, the ion exchange membrane 10 has an electrolyte 12 consisting of a layer 12A which is the layer (Sa), and a layer 12B which is the layer (Sb), and an inorganic particle layer 14 disposed on the surface of the layer 12A, and the reinforcing material 20 is disposed in the electrolyte membrane 12. As shown in Fig. 3, the surface on the inorganic particle layer 14 side in the layer 12A has a convexoconcave structure.

The ion exchange membrane of the present invention has the same construction as the ion exchange membrane with a catalytic layer of the present invention, except that it does not have the catalytic layer which the ion exchange membrane with a catalytic layer of the present invention has, and the preferred embodiment is also the same.

The details of the respective layers of the ion exchange membrane of the present invention are the same as those of the ion exchange membrane with a catalyst layer of the present invention, and therefore, their description is omitted.

The method for producing the ion exchange membrane of the present invention is not particularly limited, but, for example, it can be obtained by carrying out steps other than step (iv) among the steps (i) to (iv) shown above as an example of the production method for the ion exchange membrane with a catalyst layer of the present invention.

The ion exchange membrane of the present invention is suitable for use in the production of an ion exchange membrane with a catalyst layer of the present invention.

### [Electrolytic hydrogenation apparatus]

The electrolytic hydrogenation apparatus of the present invention has an electrolyzer provided with an anode and a cathode, and an ion exchange membrane with a catalyst layer of the present invention, wherein the ion exchange membrane with a catalyst layer is disposed in the electrolyzer so as to separate the above anode and the above cathode, and the above inorganic particle layer of the ion exchange membrane with a catalyst layer is disposed on the above anode side, and the above catalyst layer of the ion exchange membrane with a catalyst layer is disposed on the above cathode side.

Since the electrolytic hydrogenation apparatus of the present invention has the above-described ion exchange membrane with a catalyst layer, the electrolysis voltage can be lowered and the current efficiency can be made to be high during the electrolytic hydrogenation of an aromatic compound.

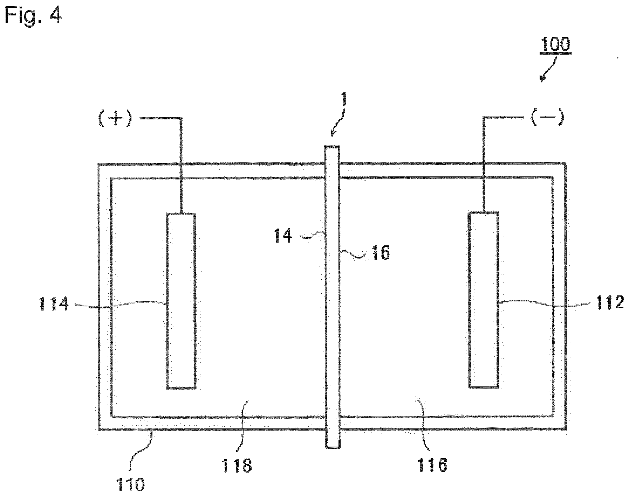

One embodiment of the electrolytic hydrogenation apparatus of the present invention will be described with reference to Fig. 4 as an example. Fig. 4 is a schematic diagram illustrating an example of the electrolytic hydrogenation apparatus of the present invention.

As shown in Fig. 4, the electrolytic hydrogenation apparatus 100 has an electrolyzer 110 provided with a cathode 112 and an anode 114, and an ion exchange membrane 1 with a catalyst layer mounted in the electrolyzer 110 so as to divide a cathode chamber 116 on the cathode 112 side and an anode chamber 118 on the anode 114 side.

As shown in Fig. 4, the ion exchange membrane 1 with a catalyst layer is mounted in the electrolyzer 110 so that the inorganic particle layer 14 be on the anode 114 side, and the catalyst layer 16 be on the cathode 112 side.

The cathode 112 may be disposed in contact with the ion exchange membrane 1 with a catalyst layer, or may be disposed as spaced apart from the ion exchange membrane 1 with a catalyst layer.

As the material to constitute the cathode 112 and the cathode chamber 116, stainless steel, nickel, etc. are preferred.

As the material to constitute the anode 114 and the anode chamber 118, stainless steel, nickel, etc. may be mentioned.

The surfaces of the cathode 112 and the anode 114 being electrode substrates, are preferably coated with, for example, ruthenium oxide, iridium oxide, etc.

In a case where electrolytic hydrogenation of an aromatic compound is carried out by the electrolytic hydrogenation apparatus 100, to the anode chamber 118 having the anode 114 disposed, an aqueous electrolytic solution is supplied, and to the cathode chamber 116 having the cathode 112 disposed, an aromatic compound is supplied.

As specific examples of the aromatic compound, benzene, toluene and naphthalene may be mentioned.

The aqueous electrolyte solution is a solution having an electrolyte dissolved in water. As the electrolyte, sulfuric acid, nitric acid, etc. may be mentioned. The concentration of the electrolyte is not particularly limited.

In a case where the electrolytic hydrogenation apparatus 100 is driven, protons (H⁺) generated by electrolysis of the aqueous electrolyte solution in the anode chamber 118 moves to the cathode chamber 116 side through the ion exchange membrane 1 with a catalyst layer. And, hydrogenation of the aromatic compound by proton addition occurs near the surface of the catalyst layer 16, whereby a hydrogenated organic substance will be obtained in the cathode chamber 116.

As specific examples of the hydrogenated organic substance, cyclohexane, methylcyclohexane and decahydronaphthalene may be mentioned.

### EXAMPLES

In the following, the present invention will be described in detail with reference to Examples. Ex. 1 to Ex. 8 are Examples of the present invention, and Ex. 9 to Ex. 12 are Comparative Examples. However, the present invention is not limited to these Examples.

### [Thicknesses of the respective layers of ion exchange membrane with catalyst layer, ion exchange capacity of fluorinated polymer]

Measured in accordance with the above-described methods.

### [Evaluation tests for electrolysis voltage and current efficiency]

In a test electrolyzer having an effective current carrying area of 1.5 dm² (electrolytic surface size: 150 mm in length × 150 mm in width), an ion exchange membrane with a catalyst layer-anode assembly was disposed, so that the surface having no catalyst layer formed, was in contact with the anode. Here, as the anode, an electrode having ruthenium-containing Raney nickel electrodeposited on punched SUS304 metal (short diameter: 5 mm, long diameter: 10 mm) was used. The anode and the ion exchange membrane with a catalyst layer were disposed in direct contact with each other so that no gap was created.

While adjusting the flow rate of toluene supplied to the cathode chamber to be 5 mL/min and the flow rate of a 1M aqueous sulfuric acid solution supplied to the anode chamber to be 10 mL/min, electrolytic hydrogenation of toluene was carried out under conditions of temperature: 65°C and current density: 400 mA/cm², whereby electrolysis voltage (V) and current efficiency (%) after one day from the initiation of the operation, were measured and evaluated in accordance with the following standards.

### (Electrolysis voltage)

⊚: At most 2.3V
○: More than 2.3V and at most 2.4V
×: More than 2.4V

### (Current efficiency)

⊚: At least 98%
○: At least 96% and less than 98%
×: Less than 96%

### [Production of fluorinated polymer (S1')]

CF₂=CF₂ and a monomer (X) represented by the following formula (X) are copolymerized to obtain a fluorinated polymer (S1') (ion exchange capacity: 0.65 milliequivalents/gram dry resin).

CF₂=CF-O-CF₂CF(CF₃)-O-CF₂CF₂-SO₂F (X)

### [Production of fluorinated polymer (S2')]

CF₂=CF₂ and the monomer (X) were copolymerized to obtain a fluorinated polymer (S2') (ion exchange capacity: 0.80 milliequivalents/gram dry resin).

### [Production of fluorinated polymer (S3')]

CF₂=CF₂ and the monomer (X) were copolymerized to obtain a fluorinated polymer (S3') (ion exchange capacity: 1.00 milliequivalents/gram dry resin).

### [Production of fluorinated polymer (S4')]

CF₂=CF₂ and the monomer (X) were copolymerized to obtain a fluorinated polymer (S4') (ion exchange capacity: 1.10 milliequivalents/gram dry resin).

### [Production of fluorinated polymer (S5')]

CF₂=CF₂ and the monomer (X) were copolymerized to obtain a fluorinated polymer (S5') (ion exchange capacity: 1.25 milliequivalents/gram dry resin).

The ion exchange capacities described in the above [Production of fluorinated polymer (S1')] to [Production of fluorinated polymer (S5')] represent the ion exchange capacities of the fluorinated polymers obtainable at the time when the fluorinated polymer (S1') to the fluorinated polymer (S5') were hydrolyzed by the procedure as described below.

### [Production of film A]

The fluorinated polymer (S1') was molded by a melt-extrusion method to obtain a film A (film thickness: 20 µm) made of the fluorinated polymer (S1').

### [Production of film B]

The fluorinated polymer (S2') was molded by a melt-extrusion method to obtain a film B (film thickness: 20 µm) made of the fluorinated polymer (S2').

### [Production of film C]

The fluorinated polymer (S3') was molded by a melt-extrusion method to obtain a film C (film thickness: 20 µm) made of the fluorinated polymer (S3').

### [Production of film D]

The fluorinated polymer (S3') was molded by a melt-extrusion method to obtain a film D (film thickness: 40 µm) made of the fluorinated polymer (S3').

### [Production of film E]

The fluorinated polymer (S3') was molded by a melt-extrusion method to obtain a film E (film thickness: 80 µm) made of the fluorinated polymer (S3').

### [Production of film F]

The fluorinated polymer (S4') was molded by a melt-extrusion method to obtain a film F (film thickness: 20 µm) made of the fluorinated polymer (S4').

### [Production of film G]

The fluorinated polymer (S4') was molded by a melt-extrusion method to obtain a film G (film thickness: 80 µm) made of the fluorinated polymer (S4').

### [Production of film H]

The fluorinated polymer (S5') was molded by a melt-extrusion method to obtain a film H (film thickness: 80 µm) made of the fluorinated polymer (S5').

### [Production of Film I]

The fluorinated polymer (S5') was molded by a melt-extrusion method to obtain a film I (film thickness: 100 µm) made of the fluorinated polymer (S5').

### [Production of reinforcing fabric]

Using 50 denier yarns made of PTFE for the warp and weft yarns, woven fabric 1 was obtained by plain weaving so that the density of PTFE yarns became 80 yarns/inch. The density of woven fabric 1 was 38 g/m². Here, the warp and weft yarns were composed of slit yarns.

### [Preparation of inorganic particle paste]

29.0 mass% of zirconium oxide (average particle size: 1 µm), 1.3 mass% of methylcellulose, 4.6 mass% of cyclohexanol, 1.5 mass% of cyclohexane and 63.6 mass% of water were mixed to obtain an inorganic particle paste (inorganic particle dispersion).

### [Ex. 1]

The film A, the reinforcing fabric, the film I and a mold release PET film (thickness: 100 µm) were stacked in this order, and by letting the mold release PET film to face down, and heating in a thermostatic bath set at 220°C while vacuuming the air between the film A and the film I, the respective layers were unified, and then, the mold release PET film was peeled off to obtain a reinforced precursor membrane 1-1.

Next, by roll pressing, the inorganic particle paste was transferred to the surface of the film A in the electrolyte membrane, to obtain a reinforced precursor membrane 1-2 having the inorganic particle layer disposed on the surface of the film A. Here, the deposited amount of zirconium oxide was 20 g/m².

The reinforced precursor membrane 1-2 was immersed at 95°C for 30 minutes in a solution of dimethyl sulfoxide/potassium hydroxide/water = 30/5.5/64.5 (mass ratio), and the groups that can be converted to sulfonic acid type functional groups in the reinforced precursor membrane 1-2 were hydrolyzed to convert them to K-type sulfonic acid type functional groups, followed by washing with water. The obtained membrane was then immersed in 1M sulfuric acid to convert the terminal groups from K-type to H-type, followed by drying to obtain an ion exchange membrane 1.

TFE and the above-described monomer (X) were copolymerized, followed by hydrolysis and acid treatment to form an acid type polymer (ion exchange capacity: 1.10 milliequivalents/gram dry resin), which was dispersed in a solvent of water/ethanol = 40/60 (mass%) to obtain a dispersion (hereinafter referred to also as "dispersion X") at a solid content concentration of 25.8%.

To a supported catalyst having 46 mass% platinum supported on carbon powder ("TEC10E50E" manufactured by Tanaka Kikinzoku Kogyo K.K.) (11 g), water (59.4 g) and ethanol (39.6 g) were added, followed by mixing and pulverizing by using an ultrasonic homogenizer to obtain a dispersion of the catalyst.

To the dispersion of the catalyst, the dispersion X (20.1 g) and a mixed liquid (29.2 g) having ethanol (11 g) and Zeorora-H (manufactured by ZEON Corporation) (6.3 g) preliminarily mixed and kneaded, were added. Further, to the obtained dispersion, water (3.66 g) and ethanol (7.63 g) were added and mixed for 60 minutes by using a paint conditioner to bring the solid content concentration to be 10.0 mass%, to obtain a cathode catalyst ink (catalyst dispersion).

On the ETFE sheet, the cathode catalyst ink was applied by a die coater, dried at 80°C, and then, heat treatment was conducted at 150°C for 15 minutes, to obtain a cathode catalyst layer decal, of which the platinum content was 0.4 mg/cm².

By letting the side of the ion exchange membrane having no inorganic particle layer formed and the side having the catalyst layer of the cathode catalyst layer decal to face each other, heat pressing was conducted at a pressing temperature of 150°C under conditions of the pressing time of 2 minutes and the pressure of 3 MPa to bond the ion exchange membrane 1 and the cathode catalyst layer; then the temperature was lowered to 70°C, and the pressure was released, whereupon the assembly was taken out and the ETFE sheet of the cathode catalyst layer decal was peeled off, to obtain an ion exchange membrane with a catalyst layer in Ex. 1 having the catalyst layer. A carbon felt as a cathode was bonded to the surface of the catalyst layer of the obtained ion exchange membrane, to obtain an ion exchange membrane with a catalyst layer-cathode assembly.

Here, the cathode area of the ion exchange membrane with a catalyst layer-cathode assembly was 25 cm².

### [Ex. 2]

The film F and the film H were heat-compressed to obtain a multilayer film FH.

The film A, the reinforcing fabric, the multilayer film FH, a mold release PET film (thickness: 100 µm) were stacked in this order, then by letting the mold release PET film face down, and heating in a thermostatic bath set at 220°C while vacuuming the air between the film A and the multilayer film FH, the respective layers were unified, and then the mold release PET film was peeled off to obtain the reinforced precursor membrane 2-1.

Here, the multilayer film FH was disposed so that the film F side of the multilayer film FH was on the reinforcing fabric side.

In the same manner as in Ex. 1, except that the reinforced precursor membrane 2-1 was used instead of the reinforced precursor film 1-1, an ion exchange membrane with a catalyst layer-cathode assembly in Ex. 2 was obtained.

### [Ex. 3]

The film C and the film H were heat-compressed to obtain a multilayer film CH.

The ion exchange membrane with a catalyst layer-cathode layer assembly in Ex. 3 was obtained in the same manner as in Ex. 2, except that the multilayer film CH was used instead of the multilayer film FH. Here, the multilayer film CH was disposed so that the film C side of the multilayer film CH was on the reinforcing fabric side.

### [Ex. 4]

The film C and the film G were heat-compressed to obtain a multilayer film CG.

The ion exchange membrane with a catalyst layer-cathode assembly in Ex. 4 was obtained in the same manner as in Ex. 2, except that the multilayer film CG was used instead of the multilayer film FH. Here, the multilayer film CG was disposed so that the film C side of the multilayer film CG was on the reinforcing fabric side.

### [Ex. 5]

The film B and the film E were heat-compressed to obtain a multilayer film BE.

The ion exchange membrane with a catalyst layer-cathode assembly in Ex. 5 was obtained in the same manner as in Ex. 2, except that the multilayer film BE was used instead of the multilayer film FH. Here, the multilayer film BE was disposed so that the film B side of the multilayer film BE was on the reinforcing fabric side.

### [Ex. 6]

The film C and the film H were heat-compressed to obtain a multilayer film CH.

The ion exchange membrane with a catalyst layer-cathode assembly in Ex. 6 was obtained in the same manner as in Ex. 2, except that the multilayer film CH was used instead of the multilayer film FH. Here, the multilayer film CH was disposed so that the film C side of the multilayer film CH was on the reinforcing fabric side.

### [Ex. 7]

The ion exchange membrane with a catalyst layer-cathode assembly in Ex. 7 was obtained in the same as in Ex. 1, except that the film D was used instead of the film A and the film H was used instead of the film I.

### [Ex. 8]

The ion exchange membrane with a catalyst layer-cathode assembly in Ex. 8 was obtained in the same manner as in Ex. 3, except that the reinforcing fabric was not used.

### [Ex. 9]

The ion exchange membrane with a catalyst layer-cathode assembly in Ex. 9 was obtained in the same manner as in Ex. 3, except that no inorganic particle layer was provided on the surface of the film A.

### [Ex. 10]

The ion exchange membrane with a catalyst layer-cathode assembly in Ex. 10 was obtained in the same manner as in Ex. 1, except that the film J (trade name "Nafion 115", Chemours) was used instead of the ion exchange membrane 1.

### [Ex. 11]

On one surface of the film J (trade name "Nafion115", Chemours, a film composed of a fluorinated polymer having sulfonic acid groups), an inorganic particle layer was formed in the same manner as in Ex. 1 to obtain a film J with an inorganic particle layer.

The ion exchange membrane with a catalyst layer-cathode assembly in Ex. 11 was obtained in the same manner as in Ex. 1, except that the film J with an inorganic particle layer was used. Here, the catalyst layer was formed on the surface opposite to the inorganic particle layer in the film J.

### [Evaluation results]

The ion exchange membranes with catalyst layers obtained as described above were used for various evaluation tests. The evaluation results are shown in Table 1,

Here, in Table 1, "IEC" means the ion exchange capacity of the fluorinated polymer.

In Table 1, the "film thickness" means the thickness of each layer in the ion exchange membrane with a catalyst layer, which was the same as the thickness of each film used to prepare the ion exchange membrane with a catalyst layer.

In Table 1, the "low IEC layer" means the layer made of a fluorinated polymer with the lowest ion exchange capacity in the electrolyte membrane constituting the ion exchange membrane with a catalyst layer, i.e. the layer (Sa). Further, the "high IEC layer" means the layer containing a fluorinated polymer with an ion exchange capacity higher than the "low IEC layer" in the electrolyte membrane constituting the ion exchange membrane with a catalyst layer, i.e. the layer (Sb). However, in a case where a single type of film was used as the electrolyte membrane, the type of the film used was indicated in the column for the "Low IEC layer".

**[Table1]**

| | Anode side | | | Cathode side | | | | | | Anode side | | Evaluation result | |
|---|---|---|---|---|---|---|---|---|---|---|---|---|---|
| | Low IEC layer (layer (Sa)) | | | High IEC layer 1 (layer (Sb)) | | | High IEC layer 2 (layer (Sb)) | | | Inorganic particle layer on low IEC layer side | Surface convexo-convcave structure on low IEC layer side | Electrolysis voltage (V) | Current efficiency (%) |
| | Type of film | IEC | Film thickness (µm) | Type of film | IEC | Film thickness (µm) | Type of film | IEC | Film thickness (µm) | | | | |
| Ex. 1 | A | 0.65 | 20 | I | 1.25 | 100 | | | | Present | Present | ⊚ | ○ |
| Ex. 2 | A | 0.65 | 20 | F | 1.10 | 20 | H | 1.25 | 80 | Present | Present | ⊚ | ○ |
| Ex. 3 | A | 0.65 | 20 | C | 1.00 | 20 | H | 1.25 | 80 | Present | Present | ⊚ | ⊚ |
| Ex. 4 | A | 0.65 | 20 | C | 1.00 | 20 | G | 1.10 | 80 | Present | Present | ○ | ⊚ |
| Ex. 5 | A | 0.65 | 20 | B | 0.80 | 20 | E | 1.00 | 80 | Present | Present | ○ | ⊚ |
| Ex. 6 | B | 0.80 | 20 | C | 1.00 | 20 | H | 1.25 | 80 | Present | Present | ⊚ | ○ |
| Ex. 7 | D | 1.00 | 40 | H | 1.25 | 80 | | | | Present | Present | ⊚ | ⊚ |
| Ex. 8 | A | 0.65 | 20 | C | 1.00 | 20 | H | 1.25 | 80 | Present | Absent | ⊚ | ○ |
| Ex. 9 | A | 0.65 | 20 | C | 1.00 | 20 | H | 1.25 | 80 | Absent | Present | × | ⊚ |
| Ex. 10 | J | 0.91 | 127 | | | | | | | Absent | Absent | × | × |
| Ex. 11 | J | 0.91 | 127 | | | | | | | Present | Absent | × | × |

As shown in Table 1, by making the electrolyte membrane to have a multi-layered structure, so that a layer containing a fluorinated polymer with a low ion exchange capacity (low IEC layer) was disposed on the anode side and an inorganic particle layer was provided on the surface of the low IEC layer, it was shown that the electrolysis voltage could be made low, and the current efficiency could be made high, at the time of electrolytic hydrogenation of an aromatic compound (Ex. 1 to 8).

Further, by using the ion exchange membrane with a catalyst layer in Ex. 1, carbon felt was bonded as a cathode on the surface of the inorganic particle layer, to obtain an ion exchange membrane with a catalyst layer-cathode assembly in Ex. 12. By disposing the side where the inorganic particle layer was formed (i.e. the film A side) in the ion exchange membrane with a catalyst layer-cathode assembly in Ex.12, on the cathode side, and the side where the catalyst layer was formed (i.e. the film I side), on the anode side, the same evaluation as in Ex. 1 was conducted, whereby the voltage rose sharply, and electrolytic hydrogenation could not be conducted. The reason for this is considered to be that the film A and the film I peeled off.

The entire disclosure of Japanese Patent Application No. 2020-018828 filed on February 6, 2020 including specification, claims, drawings and summary is incorporated herein by reference in its entirety.

### REFERENCE SYMBOLS

1: Ion exchange membrane with catalyst layer
10: Ion exchange membrane
12: Electrolyte membrane
12A: Layer (Sa)
12B: Layer (Sb)
14: Inorganic particle layer
16: Catalyst layer
20: Reinforcing material
22: Reinforcing yarn
24: Sacrificial yarn
26: Filament
28: Elution hole
100: Electrolytic hydrogenation apparatus
110: Electrolytic tank
112: Cathode
114: Anode
116: Cathode chamber
118: Anode chamber
B, B1, B2: Convex portion
D1, D2: Shortest distance
P1, P2: Position
T1, T2: Position

## Claims

1. An ion exchange membrane with a catalyst layer, having
an inorganic particle layer containing inorganic particles and a binder,
a layer (Sa) containing a first fluorinated polymer having sulfonic acid type functional groups,
a layer (Sb) containing a second fluorinated polymer having sulfonic acid type functional groups, and
a catalyst layer, in this order, wherein
the ion exchange capacity of the first fluorinated polymer is lower than the ion exchange capacity of the second fluorinated polymer.

2. The ion exchange membrane with a catalyst layer according to Claim 1, which has a convexoconcave structure at the interface on the inorganic particle layer side in the layer (Sa).

3. The ion exchange membrane with a catalyst layer according to Claim 1 or 2, which further has a reinforcing material containing reinforcing yarns.

4. The ion exchange membrane with a catalyst layer according to any one of Claims 1 to 3, wherein the ion exchange capacity of the first fluorinated polymer is from 0.5 to 1.1 milliequivalents/gram dry resin.

5. The ion exchange membrane with a catalyst layer according to any one of Claims 1 to 4, wherein the ion exchange capacity of the second fluorinated polymer is from 0.7 to 2.0 milliequivalents/gram dry resin.

6. The ion exchange membrane with a catalyst layer according to any one of Claims 1 to 5, wherein the first fluorinated polymer having sulfonic acid type functional groups contains units based on a fluorinated olefin and units having sulfonic acid type functional groups and fluorine atoms.

7. The ion exchange membrane with a catalyst layer according to Claim 6, wherein the fluorinated olefin is tetrafluoroethylene, chlorotrifluoroethylene, vinylidene fluoride, vinyl fluoride or hexafluoropropylene.

8. The ion exchange membrane with a catalyst layer according to Claim 6 or 7, wherein the units having sulfonic acid type functional groups and fluorine atoms are units represented by the formula (1):
Formula (1) -[CF₂-CF(-L-(SO₃M)ₙ)]-
-in the formula, L is an n+1-valent perfluorohydrocarbon group which may contain an etheric oxygen atom, M is a hydrogen atom, an alkali metal or a quaternary ammonium cation, and n is 1 or 2.

9. An ion exchange membrane having
an inorganic particle layer containing inorganic particles and a binder,
a layer (Sa) containing a first fluorinated polymer having sulfonic acid type functional groups,
a layer (Sb) containing a second fluorinated polymer having sulfonic acid type functional groups, in this order, wherein
the ion exchange capacity of the first fluorinated polymer is lower than the ion exchange capacity of the second fluorinated polymer.

10. The ion exchange membrane according to Claim 9, which has a convexoconcave structure at the interface on the inorganic particle layer side in the layer (Sa).

11. The ion exchange membrane according to Claim 9 or 10, which further has a reinforcing material containing reinforcing yarns.

12. The ion exchange membrane according to any one of Claims 9 to 11, wherein the ion exchange capacity of the first fluorinated polymer is from 0.5 to 1.1 milliequivalents/gram dry resin.

13. The ion exchange membrane according to any one of Claims 9 to 12, wherein the ion exchange capacity of the second fluorinated polymer is from 0.7 to 2.0 milliequivalents/gram dry resin.

14. A method for producing an ion exchange membrane with a catalyst layer as defined in any one of Claims 1 to 8, which comprises obtaining the ion exchange membrane as defined in Claim 9, and forming a catalyst layer on the layer (Sb).

15. An electrolytic hydrogenation apparatus having
an electrolyzer equipped with an anode and a cathode, and
the ion exchange membrane with a catalyst layer as defined in any one of Claims 1 to 8, wherein
the ion exchange membrane with a catalyst layer is disposed in the electrolyzer so as to separate the anode and the cathode, and
the inorganic particle layer of the ion exchange membrane with a catalyst layer is disposed on the anode side, and the catalyst layer of the ion exchange membrane with a catalyst layer is disposed on the cathode side.

16. The electrolytic hydrogenation apparatus according to Claim 15, wherein an aqueous electrolyte solution is supplied to an anode chamber in which the anode is disposed, and an aromatic compound is supplied to a cathode chamber in which the cathode is disposed.
